# EUROPÄISCHE PATENTSCHRIFT

(11) **EP 1 413 474 B1**
(45) Veröffentlichungstag und Bekanntmachung des Hinweises auf die Patenterteilung: **28.07.2010**
(21) Anmeldenummer: 03019919.4
(22) Anmeldetag: 02.09.2003
(51) Int. Cl.: B60N 2/68, B60N 2/22, B21C 23/02, B21J 5/00

(54) **Sitz- oder Lehnenrahmenteil eines Sitzes mit Neigungsversteller**
Seat or backrest frame element of a seat with reclining mechanism
Elément de structure pour siège ou dossier d'une siège avec mécanisme d'inclinaison

(30) Priorität: 23.10.2002 DE 10249394
(43) Veröffentlichungstag der Anmeldung: 28.04.2004
(73) Patentinhaber: Alutech Gesellschaft m.b.H., 5651 Lend (AT)
(72) Erfinder: Garnweidner, Peter, 5112 Lamprechtshausen (AT)
(74) Vertreter: Kilian, Helmut

(56) Entgegenhaltungen:
- EP-A- 0 745 508
- EP-A- 0 751 036
- WO-A-98/42460
- US-A- 3 992 054
- US-A- 5 649 738
- US-A- 5 749 135

## Beschreibung

Die Erfindung betrifft ein aus einem Leichtmetall gefertiges Sitz- oder Lehnenrahmenteil eines Sitzes mit Neigungsversteller.

Derartige Lehnenrahmenteile sind z.B. aus der US 5 749 135 A oder der EP 0 751 036 A bekannt.

Sitz- oder Lehnenrahmenteile eines Sitzes aus einem Leichtmetall werden üblicherweise als Gussteile, Blechteile, Strangpressprofilteile oder in Form von Baugruppen ausgebildet, die aus einer Kombination derartiger Bauteile bestehen.

Alle derartigen bekannten Bauformen sind mit Problemen bei der Anbindung an den Neigungsversteller verbunden oder auf Grund ihrer Werkstoffeigenschaften nur bedingt einsetzbar, was insbesondere für Gussteile gilt. Da die Sitzkonstruktion ein energieabsorbierendes Bauteil ist, liegt 'das Problem bei Gussteilen insbesondere in der geringen Dehnung.

Strangpressprofilteile oder -baugruppen und Blechteile oder Blechbaugruppen sind gleichfalls hinsichtlich ihrer Anbindung an den Neigungsversteller problematisch. Da Neigungsversteller nach Art eines kleinen manuellen oder elektrisch betriebenen Getriebes funktionieren, sind diese aus Stahl hergestellt. Ihre Anbindung an eine Leichtmetallkonstruktion muss daher mechanisch, beispielsweise durch Schrauben, Nieten oder Formschluss erfolgen. Da der Bereich der Anbindung des Neigungsverstellers an den Rahmenteil der. Bereich der höchsten Belastung ist, sind die bei der Anbindung in der Leichtmetallkonstruktion auftretenden Spannungsspitzen problematisch. Um mit diesem Problem umzugehen, sind üblicherweise großflächige Adapterbleche aus Stahl an den Neigungsversteller angeschweisst, die ihrerseits mit der Leichtmetallkonstruktion verbunden sind. Dabei handelt es sich in der Regel um eine Kombination aus einem Formschluss und mechanischen Verbindungselementen.

Eine örtliche Verstärkung der Konstruktion ist deswegen nicht möglich, weil bei einem Leichtbau aus Leichtmetalllegierungen dünne Wandstärken verwendet werden und die Anbindung beispielsweise eines Verstärkungsbleches durch Schweissen erfolgen müsste. Da beim Schweissen von Leichtmetalllegierungen, insbesondere Aluminiumlegierungen eine praktisch irreparable Entfestigung auftritt, ist das nicht möglich.

Da somit bisher immer Adapterbleche verwandt werden müssen, geht bei den bisher üblichen Konstruktionen durch das Gewicht der verwandten Adapterbleche ein Teil der Gewichtsersparnis durch die Leichtbauweise verloren.

Die der Erfindung zu Grunde liegende Aufgabe besteht daher darin, einen Aufbau eines aus einem Leichtmetall gefertigen Sitz- oder Lehnenrahmenteils eines Sitzes mit Neigungsversteller vorzuschlagen, der mit einer Gewichtsersparnis verbunden ist.

Diese Aufgabe wird gemäß der Erfindung durch die Ausbildung gelöst, die im Anspruch 1 angegeben ist.

Bei dem erfindungsgemäßen Sitz- oder Lehnenrahmenteil handelt es sich um ein einstückiges Bauteil aus einem Knetwerkstoff, das in seinem Aufbau ähnlich einem Strangpressprofilteil ist und dessen Anbindungsbereich zum Neigungsversteller massiv ist, ohne dass aufgeschweisste Adapterbleche am Neigungsversteller vorgesehen sein müssen.

Dadurch dass die Adapterbleche entfallen, die bei bekannten Konstruktionen vorgesehen sind, ergibt sich die gewünschte Gewichtsersparnis.

Besonders bevorzugte Weiterbildungen und Ausgestaltungen des erfindungsgemäßen Sitz- oder Lehnenrahmenteils sind Gegenstand von Anspruch 2.

Im Folgenden wird anhand der zugehörigen Zeichnung ein besonders bevorzugtes Ausführungsbeispiel des erfindungsgemäßen Sitz- oder Lehnenrahmenteils näher beschrieben.

Es zeigen
Fig. 1 eine Vorderansicht und eine Seitenansicht des Ausführungsbeispiels des erfindungsgemäßen Sitz- oder Lehnenrahmenteils,
Fig. 2 eine Schnittansicht durch einen Schenkel des in Fig. 1 dargestellten Sitz- oder Lehnenrahmenteils längs der Linie A-A in Fig. 1,
Fig. 3 eine Schnittansicht durch einen Schenkel des in Fig. 1 dargestellten Sitz- oder Lehnenrahmenteils längs der Linie B-B in Fig. 4,
Fig. 4 das in Fig. 1 dargestellte Detail X in einer vergrößerten Ansicht und
Fig. 5 in einer Schnittansicht längs der Linie C-C in Fig. 4 die Anbindung des Rahmenteils an den Neigungsversteller.

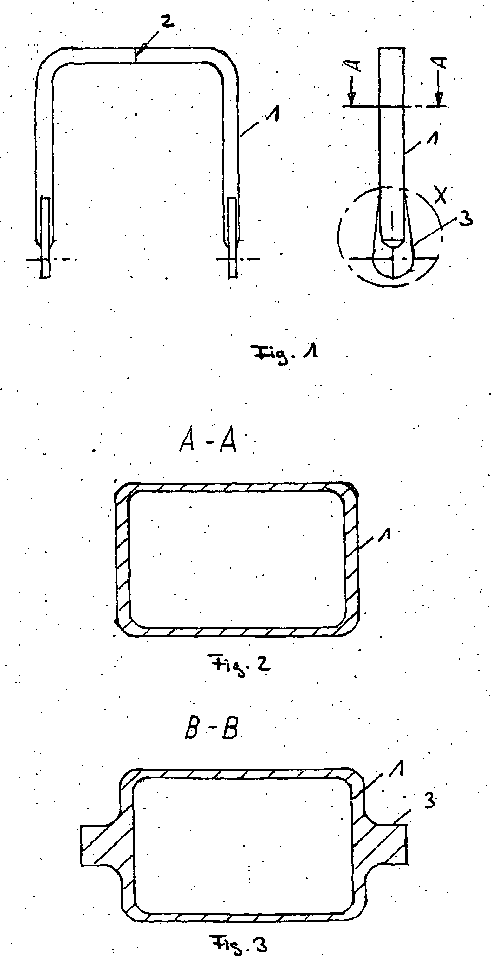

In Fig. 1 ist ein Sitz- oder Lehnenrahmenteil 1 eines Sitzes mit Neigungsversteller aus einem Leichtmetallmaterial, insbesondere einer Aluminiumlegierung dargestellt, das bei dem dargestellten speziellen Ausführungsbeispiel aus zwei Halbrahmenteilen gebildet ist, die an einer Verbindungsstelle 2 miteinander verbunden sind.

Wie es in den Figuren 2 und 3 dargestellt ist, besteht der Sitz- oder Lehnenrahmenteil 1 aus einem Hohlprofil mit im wesentlichen rechteckigem Querschnitt, das gemäß Fig. 3 auf der Seite der Anbindung an den Neigungsversteller 5 mit einer Verstärkung 3 ausgebildet ist.

Der Sitz- oder Lehnenrahmenteil 1 besteht hierzu aus einem kombinierten Schmiede- und Strangpressbauteil aus einem Knetwerkstoff, das auch als sogenanntes "Combined closed die forming and extrusion" Bauteil oder CCDFE-Bauteil bekannt ist und beispielsweise von der norwegischen Firma Alupro-N auf dem Markt erhältlich ist. Dieses Bauteil hat ein Knetgefüge als Werkstoffgefüge und weist eine Schmiedeseite.und eine Strangpress- oder Extrusionsseite auf.

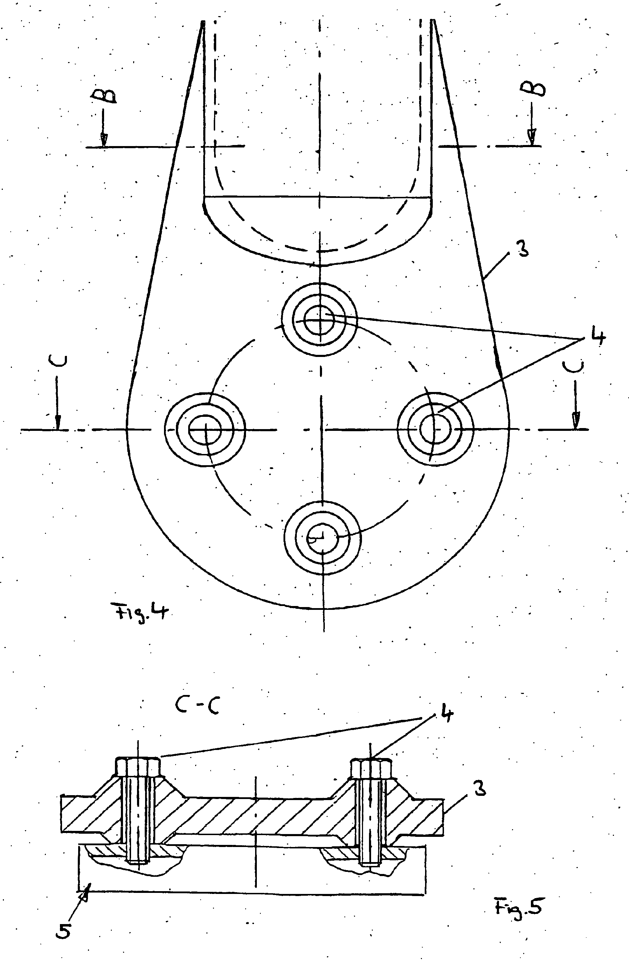

Die Strangpressseite des kombinierten Schmiede- und Strangpressbauteils bildet das Rahmenteil und seine Schmiedeseite ist mit dem Neigungsversteller 5 verbunden oder bildet einen Teil des Neigungsverstellers 5, wie es insbesondere in Fig. 5 dargestellt ist.

Wie es bereits erwähnt wurde, ist die Schmiedeseite 3 zur Anbindung an den Neigungsversteller 5 massiv ausgeführt, so dass die Anbindung mittels Schrauben oder Bolzen 4 erfolgen kann.

Der Sitz- oder Lehnenrahmenteil ist aus zwei Halbrahmenteilen gebildet, die an einer Verbindungsstelle 2 miteinander verbunden sind, wenn an beiden Seiten, d. h. an beiden Halbrahmenteilen Neigungsversteller vorgesehen sind. Die Verbindung der Halbrahmenteile erfolgt durch Abbrennstumpfschweissen oder durch eine mechanische Verbindung.

Wenn nur an einer Seite des Sitz- oder Lehnenrahmenteils ein Neigungsversteller vorgesehen ist, ist das Bauteil einstückig ausgebildet.

Das kombinierte Schmiede- und Strangpressbauteil, aus dem' das Sitz- oder Lehnenrahmenteil 1 gebildet ist, kann aufseiten des Neigungsverstellers 5 mit einem Strangpressprofilteil, einem Blechrahmenteil oder einem Gussrahmenteil kombiniert sein.

## Patentansprüche

1. Aus einem Leichtmetall gefertigtes Sitz- oder Lehnenrahmenteil (1) eines Sitzes mit Neigungsversteller (5), **dadurch gekennzeichnet, dass** das Rahmenteil aus der Strangpressseite eines kombinierten Schmiede- und Strangpressbauteils aus einem Knetwerkstoff gebildet ist, dessen Schmiedeseite (3) massiv ausgeführt ist und mit dem Neigungsversteller verbunden ist oder einen Teil des Neigungsverstellers bildet.

2. Rahmenteil nach Anspruch 1, **dadurch gekennzeichnet, dass** es aus zwei miteinander verbundenen Halbrahmen besteht, die jeweils mit einem Neigungsversteller (5) versehen sind.

## Claims

1. Light metal seat or backrest frame element (1) of a seat with a reclining mechanism (5), **characterised in that** the frame element is comprised of the extruded side of a combined forged and extruded component made of a wrought material, the forged side (3) of which is made solid and is connected to the reclining mechanism or constitutes a part of the reclining mechanism,

2. Frame element according to claim 1, **characterised in that** it consists of two half frames connected with each other, which are each provided with a reclining mechanism (5).

## Revendications

1. Élément de structure pour siège ou dossier (1) fabriqué en un métal léger d'un siège avec mécanisme d'inclinaison (5), **caractérisé en ce que** l'élément de structure est formé par le côté extrudé d'un composant forgé et extrudé combiné, en un matériau pétri, dont le côté forgé (3) est réalisé massivement et est relié au mécanisme d'inclinaison ou forme une partie du mécanisme d'inclinaison.

2. Élément de structure selon la revendication 1, **caractérisé en ce qu'**il se compose de deux demi-structures reliées l'une à l'autre qui sont pourvues respectivement d'un mécanisme d'inclinaison (5).
